# EUROPÄISCHE PATENTANMELDUNG

(11) **EP 0 755 746 A2**
(43) Veröffentlichungstag der Anmeldung: **29.01.1997**
(21) Anmeldenummer: 96107150.3
(22) Anmeldetag: 07.05.1996
(51) Int. Cl.: B23P 11/00, B60R 21/26, B21D 39/20, B23P 19/04

(54) **Vorrichtung zum Befestigen eines metallischen, geflochtenen Siebes**

(30) Priorität: 19.07.1995 DE 19526347
(71) Anmelder: Preh-Werke GmbH & Co. KG, 97616 Bad Neustadt (DE)
(72) Erfinder: Bardroff, Hans, 97618 Hohenroth (DE); Schrenk, Peter, 97656 Obereusbach (DE)
(74) Vertreter: Pfeiffer, Helmut, Dipl.-Ing.

(57) **Zusammenfassung**

Die Erfindung zeigt einen Spreizdorn (11) zur Befestigung eines metallischen Drahtsiebes (5) in einem an die Innenwand eines Rohres (1) in Achsrichtung angeformten Bett (3), wobei der Spreizdorn (11) eine bewegbare Backe (12) aufweist, an deren Arbeitsfläche in den Randbereichen einander gegenüberliegende, erhabene Preßnocken (14) angeordnet sind.

## Beschreibung

Die Erfindung betrifft eine Vorrichtung zum Befestigen mindestens eines, metallischen geflochtenen Siebes in ein an die Innenwandung eines Rohres eingeformtes Bett, wobei das Rohr fest in einem Werkstückträger eingespannt ist und die Vorrichtung aus einem in das Rohr verfahrbaren und aus diesem herausziehbaren Spreizdorn besteht.

Derartige Rohre sind Bestandteil von Gasgeneratoren für Prallsäcke zum Personenschutz in Kraftfahrzeugen. Hierbei werden Folienstreifen, zum Beispiel aus Aluminium, in dem Inneren des Rohres zur gasdichten Abdeckung einer Vielzahl von in der Rohrwandung befindlichen Bohrungen benutzt, die sich in zwei sich gegenüberliegenden in Richtung der Rohrachse erstreckenden Segmenten befinden. Darüber wird ein metallisches, geflochtenes Sieb in das Rohr eingebracht, das zur Zurückhaltung von größeren Partikeln dient, wenn die pyrotechnische Ladung des Gasgenerators gezündet wird.

Es ist bekannt, diese selbstklebenden Folienstreifen mittels eines als Spreizdorn ausgebildeten Zwischenträgers aufzunehmen, in das Rohr einzubringen und mittels Spreizung des Dorns an der vorgesehenen Stelle einzukleben. Die Befestigung des danach eingelegten Siebes bereitete bisher Probleme und einen hohen manuellen Aufwand.

Der Erfindung liegt die Aufgabe zugrunde, eine Vorrichtung zum Befestigen des/der Siebe in ein an die Innenwandung eines Rohres eingeformtes Bett zu schaffen.

Die Aufgabe wird bei einer Vorrichtung eingangs genannter Art durch die kennzeichnenden Merkmale des Hauptanspruchs gelöst. Ausgestaltungen der Erfindung sind in den weiteren Ansprüchen angegeben.

Ein Ausführungsbeispiel der Erfindung ist in der Zeichnung schematisch dargestellt.

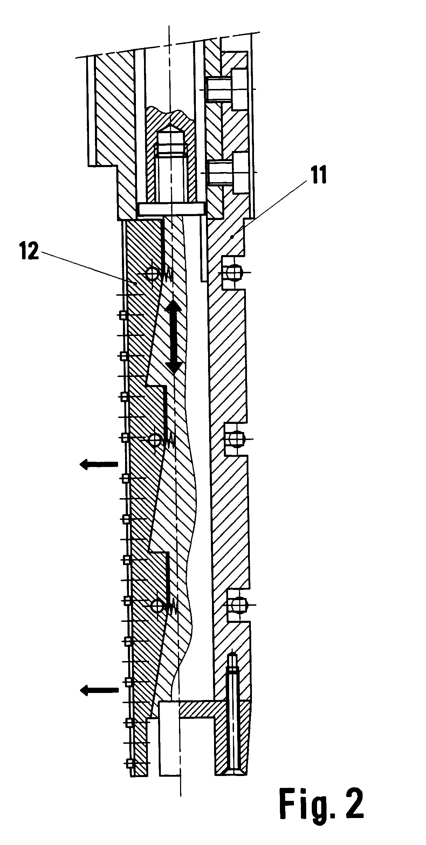

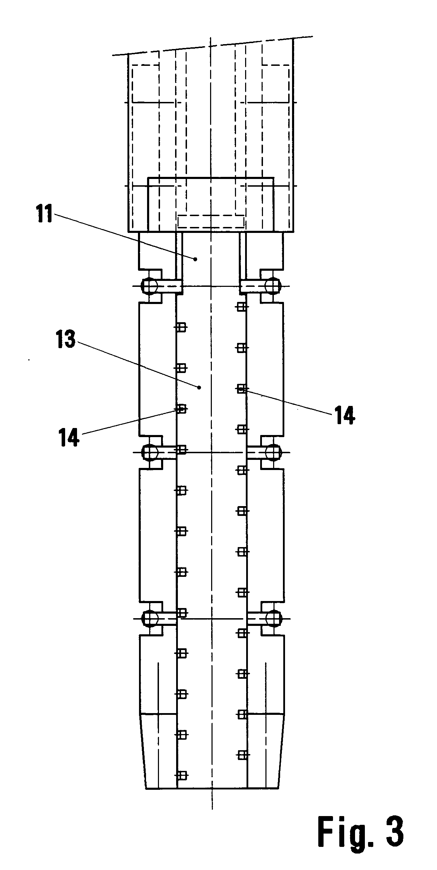

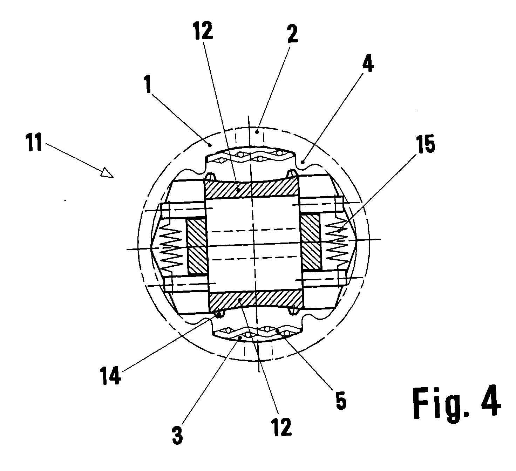

Es zeigen:
**Fig. 1**
   eine Montageanlage;
**Fig. 2**
   einen Schnitt durch einen vergößert dargestellten Spreizdorn;
**Fig. 3**
   eine Seitenansicht zu Fig. 2;
**Fig. 4**
   eine Draufsicht im Schnitt zu Fig. 3 mit angedeutetem Rohr.

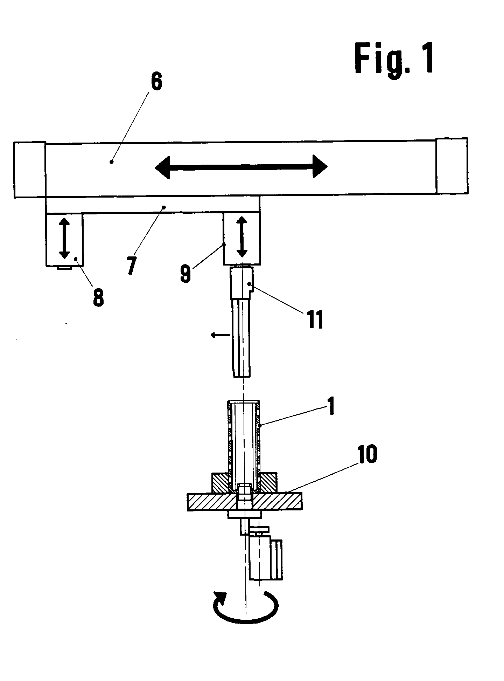

Das in Fig. 1 gezeigte Rohr 1 ist zum Beispiel aus Aluminium oder einer metallischen Legierung als Fließpreßteil hergestellt und dient als Gasgenerator für einen im Fahrzeugbau zur Personensicherheit verwendeten Prallsack. Im Bedarfsfall wird dieser durch Zündung einer pyrotechnischen Ladung am Kopf des Rohres 1 aufgeblasen, wobei das erzeugte Gas das Rohr 1 durch eine Vielzahl von in der Rohrwandung befindlichen Bohrungen 2 austritt. Die Bohrungen 2 befinden sich in zwei sich gegenüberliegenden in Richtung der Rohrachse erstreckenden Betten 3 bzw. Segmenten. Um auszuschließen, daß im Laufe der Zeit Fahrzeuginsassen mit eventuell aus dem Treibsatz ausgasenden Substanzen in Berührung kommen, werden die Bohrungen 2 mit innerhalb des Rohres eingebrachten, zum Beispiel selbstklebenden vorzugsweise metallischen Folienstreifen abgedeckt. Diese Folie wird durch den Explosionsdruck im Bereich der Bohrungen zerstört, so daß das erzeugte Gas austreten kann. Die Betten 3 werden seitlich durch an die Rohrinnenwandung angeformte Rippen 4 begrenzt, die über die ganze Rohrlänge verlaufen. Zwischen jedem Rippenpaar 4 ist ein metallisches Sieb 5 eingebracht, das die jeweiligen Folienstreifen abdeckt. Dadurch wird verhindert, daß bei der Explosion der Treibladung feste Teilchen durch die Bohrungen 2 in den Prallsack gelangen.

Nachstehend wird in Verbindung mit den Figuren die Montageanlage zur Befestigung des Siebes in dem Rohr 1 beschrieben. Am Galgen 6 ist ein horizontal in mehrere Stellungen verschiebbarer Schlitten 7 mit zwei Werkzeugköpfen 8, 9 angeordnet. Die Köpfe 8, 9 können jeweils über einen Werkstückträger 10 positioniert werden, in dem senkrecht das Rohr 1 eingespannt ist. Der Werkstückträger 10 ist so ausgebildet, daß das Rohr 1 um seine senkrechte Achse um 180° gedreht werden kann. Der Werkzeugkopf 9 trägt ein als Spreizdorn 11 ausgebildetes Werkzeug.
Der Werkzeugkopf 8 trägt ein hier nicht dargestelltes und nicht weiter interessierendes Werkzeug für einen vorangegangenen Arbeitsschritt. Die Werkzeuge sind durch ihre Köpfe jeweils senkrecht verschiebbar und gelangen so in ihre jeweilige Arbeitsposition.

Für den zu beschreibenden Arbeitsschritt mit der hier interessierenden Vorrichtung ist in das von einem Rippenpaar 4 gebildete Bett 3 ein Sieb 5 eingelegt, wobei die Länge des Siebes dem Rohr 1 entspricht und seine Breite dem lichten Abstand des Rippenpaares 4 mindestens entspricht bzw. demgegenüber sogar etwas breiter ist, wenn sich nicht zum Fuß der Rippen der lichte Abstand etwas verringert.

Der am Werkzeugträger 9 befindliche Spreizdorn 11 hat seine Arbeitsposition in einer fiktiven Verlängerung der Rohrachse und das Rohr 1 und der Spreizdorn 11 sind einander so zugeordnet, daß sich eine aus dem Spreizdorn 11 ausfahrbare Backe 12 in der fiktiven Verlängerung des Bettes 3 zwischen einem Rippenpaar 4 befindet. Danach fährt der Spreizdorn 11 in das Rohr 1 um ein vorgegebenes Maß ein und die Backe 12 wird rechtwinklig um ein vorgegebenes Maß parallel zur Rohrachse ausgefahren, zum Beispiel über einen Keiltrieb, so daß die Randbereiche des Siebes 5 mittels an der Arbeitsfläche 13 der Backe 12 befindliche Preßnocken 14 in die lichte Weite zwischen einem Rippenpaar 4 gepreßt werden. Die Preßnocken 14 befinden sich an Rändern der Arbeitsfläche 13 und sind vorteilhafterweise versetzt zueinander angeordnet. Nach dem Einpreßvorgang erfolgt die Rückstellung der Backe 12 mittels Zugfedern 15 und der Spreizdorn 11 wird aus dem Rohr 1 entfernt. Der Spreizdorn kann auch zwei einander gegenüberliegende Backen zur gleichzeitigen Einpressung zweier sich gegenüberliegenden Siebe aufweisen.

Dadurch, daß das metallische Sieb in das zwischen einem Rippenpaar 4 gebildete Bett 3 durch die Preßnocken 14 eingepreßt wird, können sich die einzelnen Drähte des Siebes zwischen den Rippen verkrallen und verspannen. Dieser Verspannungseffekt wird dadurch noch erhöht, daß die sich gegenüberliegenden Nocken 14 versetzt zueinander angeordnet sind. Damit bilden sich aneinanderliegende, jeweils mit der Spitze des einen zur Basis des anderen zugeordnete Dreiecke, wobei an den Berührungspunkten der Preßnocken 11 am Sieb 5 die tiefsten Einpreßpunkte gebildet werden und sich dadurch flächenförmige Wellungen quer über das Sieb von Einpreßpunkt zu Einpreßpunkt ergeben. Hierdurch wird die Verspannung erhöht. Ferner wird durch die punktförmige Belastung nur eine geringe Anpreßkraft im Einpreßvorgang benötigt und der Spreizdorn kann entsprechend leicht konstruiert sein.

## Patentansprüche

1. Vorrichtung zum Befestigen eines metallischen, geflochtenen Drahtsiebes in ein an die Innenwandung eines Rohres eingeformtes Bett, wobei das Rohr fest in einem Werkstückträger eingespannt ist und die Vorrichtung aus einem in das Rohr ein- und ausfahrbaren Spreizdorn besteht, **dadurch gekennzeichnet**, daß dessen bewegliche Backe (12) an deren Arbeitsfläche (13) in den Randbereichen einander gegenüberliegende, erhabene Preßnocken (14) aufweist, die innerhalb der lichten Weite des Bettes (3) das Sieb (5) einpressen.

2. Vorrichtung nach Anspruch 1, **dadurch gekennzeichnet**, daß die einander gegenüberliegenden Nocken (14) versetzt zueinander angeordnet sind.

3. Vorrichtung nach Anspruch 1, **dadurch gekennzeichnet**, daß der Spreizdorn (11) zwei einander gegenüberliegende bewegliche Backen (12) aufweist.
